Europäisches Patentamt

European Patent Office

Office européen des brevets

(19)

(11) **EP 0 544 006 B1**

(12) **EUROPEAN PATENT SPECIFICATION**

(45) Date of publication and mention
of the grant of the patent:
**06.11.1996 Bulletin 1996/45**

(21) Application number: **92911106.0**

(22) Date of filing: **16.06.1992**

(51) Int Cl.[6]: **C08F 10/00**, C08F 4/02,
C08F 4/654

(86) International application number:
**PCT/JP92/00765**

(87) International publication number:
**WO 92/22592 (23.12.1992 Gazette 1992/32)**

(54) **PRODUCTION OF A COMPONENT OF OLEFIN POLYMERIZATION CATALYST**

HERSTELLUNG EINES BESTANDTEILS EINES KATALYSATORS FÜR DIE OLEFINPOLYMERISATION

PRODUCTION D'UN COMPOSANT DE CATALYSEUR DE POLYMERISATION D'OLEFINE

(84) Designated Contracting States:
**BE CH DE FR GB IT LI NL SE**

(30) Priority: **17.06.1991 JP 171623/91**
**18.06.1991 JP 173024/91**

(43) Date of publication of application:
**02.06.1993 Bulletin 1993/22**

(73) Proprietor: **IDEMITSU PETROCHEMICAL CO. LTD.**
**Tokyo 100 (JP)**

(72) Inventors:
• **FUNABASHI, Hideo,**
**Idemitsu Petrochemical Co., Ltd**
**Chiba-ken 299-01 (JP)**
• **TANAKA, Akira,**
**Idemitsu Petrochemical Co., Ltd.**
**Chiba-ken 299-01 (JP)**

• **SUGAHARA, Akinobu,**
**Idemitsu Petrochem. Co., Ltd.**
**Chiba-ken 299-01 1 (JP)**
• **IWASAKI, Shigeo,**
**Idemitsu Petrochemical Co., Ltd.**
**Chiba-ken 299-01 (JP)**
• **MATSUO, Youichi,**
**Idemitsu Petrochemical Co., Ltd.**
**Chiba-ken 299-01 (JP)**

(74) Representative: **Hoeger, Stellrecht & Partner**
**Uhlandstrasse 14 c**
**70182 Stuttgart (DE)**

(56) References cited:
**EP-A- 0 415 588**    **EP-A- 0 415 704**
**EP-A- 0 455 813**    **EP-A- 0 461 268**
**JP-A- 3 074 341**    **JP-A-61 285 205**
**JP-A-63 054 404**

**Description**

Technical Field

The present invention relates to a process for producing a solid catalyst carrier component.

Related Art

The olefin polymerization catalysts generally called Ziegler type catalysts are generally composed of a transition metal compound component and an organometallic compound component. In the preparation of the former transition metal compound component of the above two components, a technique to use magnesium chloride or magnesium alkoxide as a carrier material, has been heretofore widely used. There are extremely large number of the related techniques in this field.

However, in the case of using these magnesium compounds as a carrier material for an olefin polymerization catalyst, it is necessary to use magnesium compounds having optimized particle size in order to improve catalyst activity and to control particle size of the resultant polymers. In this case, to control particle size, the magnesium compounds themselves are ground, or non-ground magnesium compounds are co-ground with esters when treated with the esters. In any case, a mechanical grinding or classification is required.

When a carrier material which has not been subjected to such grinding treatment, the resultant catalysts have poor polymerization activity and the yield of productivity per unit catalyst is decreased due to small amount of a transition metal (e.g., titanium) carried on a carrier. This causes a problem in that a large amount of chlorine may remain in the resultant polymers. Further, there may be a problem in that the resultant polymers may have undesirable shape and undesirable particle size distribution. Also, a trouble (e.g., clogging of transfer lines due to a large amount of small polymer particles) may occur during the process step of producing polyolefin. Accordingly, the grinding step for the magnesium compounds is considered quite important. However, the mechanical grinding step requires lots of labor and cost even when only its condition determination is considered (e.g., a grinding system such as wet type or dry type, grinding equipment, grinding strength, grinding time, which affect the shape of the ground products). Further, in the method of controlling metallic magnesium, it is difficult to make small particles of the metallic magnesium from the view point of safety, and the granules of the ground magnesium compounds do not have uniform shape. Further, in the method of grinding and sizing the obtained magnesium compounds, the granules of the ground magnesium compounds do not have uniform shape, and an attempt to obtain the ground products having narrow particle size distribution, gives rise to decrease in the yield.

Further, in order to improve the morphology of the resultant polymers such as particle size and shape, several methods are known. Such methods include a method using a magnesium carried on an inorganic oxide such as silica (Japanese Patent Application Unexamined Publication Nos. Sho 61-291,604; 61-291,105; 62-119,203; and 62-119,204); and a method using a product obtained by once dissolving a magnesium compound in a solvent such as alcohol and then again precipitating it (JP pat. Appln. Unexamined Pub. No. 56-000,811). In these methods, the grinding step is not required. However, these methods require carrier treatment or dissolution/precipitation treatment resulting in extremely complicated steps and may give rise to poor stability of the catalyst performance.

Accordingly, it is desirable to provide a method of controlling particle size, particle size distribution and shape of a carrier useful for an olefin polymerization catalyst, without using complicated procedures such as mechanical grinding and classification.

In view of these current situations, the present inventors made intensive studies to produce spherical catalyst carrier materials having controlled particle size and particle size distribution in one step reaction. As a result, it was found that a solid product useful as a catalyst carrier material for olefin polymerization, having narrow particle size distribution, can be obtained by reacting metallic magnesium, alcohol and a specific amount of a halogen-containing compound, without using particle size control treatment such as grinding or classification. It was also found that when olefin polymerization is carried out using an olefin polymerization catalyst component comprising the solid product as a carrier, the catalyst shows a titanium carrying property and polymerization activity which are better or equivalent to those of a conventional catalyst, and the resultant polymers have drastically improved morphology and better or equivalent stereo-regularity to that of a conventional polymer. Further, the present inventors found that the particle size of the resultant solid catalyst can be freely controlled and thus the morphology of the resultant polymers can be freely controlled by appropriately selecting the conditions for the reaction of metallic magnesium, alcohol and a halogen-containing compound.

In the meanwhile, the solid products, made according to the present invention, obtained by reacting metallic magnesium, alcohol and a specific amount of a halogen-containing metal compound, are materials different from any magnesium based carrier materials which are previously known. In fact, it is previously known that a small amount of iodine or ethyl orthoformate are added when metallic magnesium and alcohol are reacted (Japanese Patent Examined Publication No. Sho 46-7093, USP 4,412,132). However, in these reactions, iodine is merely used as a reaction initiator and thus the amount is extremely small. On the contrary, it is apparent that the solid products according to the present invention are quite different from those indicated in the prior art since the amount of halogen used in the present invention is much greater than the amount to be used for a reaction initiator.

In other words, it is an object of the present invention to provide a process for producing a solid catalyst carrier material useful for an olefin polymerization catalyst.

Disclosure of the Invention

To achieve the above objects, the present invention provides a process for producing a solid catalyst carrier component for an olefin polymerization catalyst, said solid catalyst carrier component having a sphericity (S) of smaller than 1.60 as defined by the following Formula (1):

$$S = (E_1/E_2)^2 \qquad (1)$$

wherein $E_1$ denotes the projected perimeter of a particle, and $E_2$ denotes the perimeter of the circle of equal projected area of a particle, and a particle size distribution index (P) of smaller than 5.0 as defined by the following Formula (2):

$$P = D_{90}/D_{10} \qquad (2)$$

wherein $D_{90}$ denotes the particle diameter corresponding to a cumulative weight fraction of 90 %, and $D_{10}$ denotes the particle diameter corresponding to a cumulative weight fraction of 10 %,

said process being characterized in that metallic magnesium, alcohol and a halogen-containing metal compound containing not less than 0.0001 gram-atom of a halogen atom, per 1 gram-atom of the metallic magnesium, are introduced into a stirring vessel, and a stirring wing fixed to a stirring axle placed in the center of the stirring vessel is used as a stirring wing, that the stirring is conducted under stirring conditions which satisfy the following equation:

$$4.3 \times 10^3 < n^3 d^2 < 4.0 \times 10^6$$

wherein d (m) is a diameter of the stirring wing; and n (rpm) is rotation rate, and that the stirring wing comprises a bottom paddle wing located close to the bottom of the vessel and an upper wing located higher than the bottom paddle wing, that the stirring wing during a reaction satisfies the following equation:

$$H/L > 0.5$$

wherein H is height between the bottom of the vessel and the most upper portion of the upper wing; and L is liquid level during the reaction, and that the most upper portion of the bottom paddle wing is located lower than the liquid level.

Further, the present invention provides a solid catalyst composition prepared from (a) the solid product prepared by the above process; and (b) a titanium compound.

Further, the solid product (a) can be used in providing a solid catalyst composition prepared from (a) a solid product or the solid product prepared by the above process; (b) a titanium compound; and (c) an electron donor compound.

Further, the solid product (a) can be used in a process for producing polyolefin which employes:

(A) a solid catalyst composition prepared from (a) the solid product prepared by the above process and (b) a titanium compound; and
(B) an organoaluminum compound.

Further, the solid product (a) can be used in a process for producing polyolefin which employes:

(A) a solid catalyst composition prepared from (a) the solid product prepared by the above process, (b) a titanium compound and (c) an electron donor compound;
(B) an organoaluminum compound; and
(C) an electron donor compound.

The present invention will be described in more detail in the following description.

In this case, the metallic magnesium may be in any form, such as granule, ribbon, and powder. Also, the metallic magnesium may preferably be those free of magnesium oxide film covering the surface, although no specific restrictions are placed on its surface state.

The alcohol is not specifically limited; but it should preferably be a lower alcohol having 1-6 carbon atoms. Ethanol is most desirable, because it gives a solid product which greatly improves the catalyst performance. The alcohol may have any purity and water content is not specifically limited. It is desirable, however, that the water content should be 1% or lower, preferably 2000 ppm or lower, because excess water in the alcohol forms magnesium hydroxide [Mg$(OH)_2$] on the surface of metallic magnesium. Moreover, the water content should preferably be as low as possible, usually 200 ppm or lower, so that the resulting magnesium compound has a good morphology.

Examples of the halogen-containing metal compounds which can preferably used, are $MgCl_2$, $MgI_2$, Mg(OEt)Cl, Mg(OEt)I, $MgBr_2$, $CaCl_2$, NaCl and KBr. Of these compounds, $MgCl_2$ and $MgI_2$ are particularly desirable.

The halogen-containing metal compounds may be used in any form and state, and may have any particle size. For example, it may be used in the form of solution in an alcohol type solvent such as ethanol.

The amount of the alcohol is not specifically limited; however, it usually ranges from 2 to 100 moles, preferably from 5 to 50 moles, per 1 mole of the metallic magnesium. Use of an excess amount of alcohol may give a magnesium compound having a good morphology. With too small amount of alcohol, it is difficult to carry out smooth stirring in a reaction vessel. However, the above-mentioned molar ratio is not limitative.

The halogen-containing metal compounds should be used in an amount of at least 0.0001 gram-atom, preferably at least 0.0005 gram-atom, most preferably at least 0.001 gram-atom, per 1 gram-atom of the metallic magnesium. With an amount less than 0.0001 gram-atom, such amount cannot distinguish the solid product from a reaction initiator. Also, if such solid product (a) is used without being ground, the resultant catalyst may be poor in supporting capacity, catalytic activity, stereoregularity and morphology of the resultant polymers. In this case, grinding of the magnesium compound is indispensable.

In the present invention, the halogen-containing compounds can be used alone or in any combination.

The amount of the halogen-containing metal compounds has no upper limit and can be appropriately selected within a range wherein the desired solid product (a) is obtained. An adequate amount is usually less than 0.06 gram-atom.

In addition, it is possible to freely control the particle size of the resulting solid product (a) by selecting an appropriate amount of the halogen-containing compound.

The reaction of metallic magnesium, alcohol, and a halogen-containing metal compound may be carried out by any known methods, for example, a method of reacting metallic magnesium, alcohol and a halogen-containing compound under reflux conditions (at about 79°C) until the reaction system does not evolve hydrogen gas any longer (usually 20 to 30 hours). More specifically, such known methods (in the case of using an iodine-containing compound as a halogen-containing compound) include: a method which comprises adding an iodine-containing compound in solid form to a mixture of alcohol and metallic magnesium, and reacting them under refluxing by heating; a method which comprises adding an alcohol solution of an iodine-containing compound dropwise to a mixture of alcohol and metallic magnesium, and reacting them under refluxing by heating; and a method which comprises adding an alcohol solution of an iodine-containing compound dropwise to a mixture of alcohol and metallic magnesium while heating the mixture.

Regardless of the method selected, the reaction should preferably be carried out in an inert gas atmosphere such as nitrogen and argon and, if necessary, in the presence of an inert organic solvent such as saturated hydrocarbons such as n-hexane.

It is not necessary to place the metallic magnesium, alcohol, and a halogen-containing metal compound all at once in the reaction vessel. It is possible to place them by portions in the reaction vessel. It is desirable to place all of the alcohol in the reaction vessel at the beginning and then to add metallic magnesium by portions several times. This procedure prevents the reaction system from evolving hydrogen gas in a large amount at one time and hence ensures safety and permits the use of a smaller reaction vessel, without the partial loss of alcohol and a halogen-containing compound by splashing. The number of portions should be properly determined according to the size of the reaction vessel; but it is usually 5 to 10 to avoid unnecessary complexity.

The reaction may be carried out batchwise or continuously. There is a modified method which comprises repeating the steps of adding a small portion of metallic magnesium to as much alcohol as necessary placed in a reaction vessel and removing the reaction product.

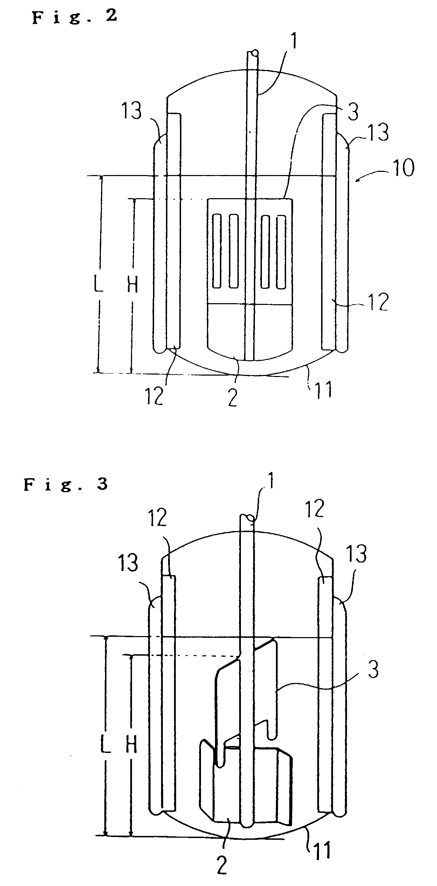

Particularly suitable stirring wings include for example, a glide wing such as a Max blend wing (Manufactured by Sumitomo Heavy Machinery) as shown in Fig. 2, and a multi-stage wing such as a full-zone wing (Manufactured by Shinkoh PanTec).

The above stirring wing is fixed to a stirring axle 1 placed in the center of the stirring vessel 10, and comprises a bottom paddle wing located close to the bottom of the vessel and an upper wing located higher than the bottom paddle wing. In this case, during a reaction the stirring wing is used under conditions which satisfy the following equation:

$$H/L > 0.5$$

wherein H is height between the bottom of the vessel and the most upper portion of the upper wing; and L is liquid level during a reaction, and the most upper portion of the bottom paddle wing being located lower than the liquid level.

The stirring wing can be modified in the following manners (1) to (5).

(1) It is preferable that the clearance between Bottom Paddle Wing 2 fixed to Rotation Axle 1 and Vessel Bottom 11 be smaller in order for particles to be sufficiently floated. Further, the number of the Bottom Paddle Wing 2 is not necessarily one, but can be plural to form, for example, a turbine wing. In addition, the Bottom Paddle Wing 2 may be a retreating wing.

(2) Upper Wing 3 is to sufficiently mix particles swept out by the Bottom Paddle Wing 2. The Upper Wing 3 may be integrally formed with the Bottom Paddle Wing 2 or may be multi-stage type. In addition, the Upper Wing 3 may have an angle with respect to the Bottom Paddle Wing 2, but may preferably be in the shape of glide.

(3) If a ratio of the height H between the Vessel Bottom 11 and the most upper portion of the Upper Wing 3, and Liquid Level L is not greater than 0.5, in the upper portion of a liquid to be treated, a portion where stirring is not well conducted is created. This results in generation of agglomeration and increase in amount of large particles. To avoid the generation of the agglomeration, the rotation rate of the stirring wing may be increased. However, in this case, the amount of small particles may be increased, leading to large particle size distribution. Therefore, H/L is preferably not less than 0.7, particularly not greater than 1.

(4) A ratio of Wind Diameter d to Vessel Diameter D is not particularly limited to, but may preferably be 0.3 < d/D < 0.8, more preferably 0.4 < d/D < 0.6.

(5) A plurality of Baffles 12 to be arranged in the axle direction, may be fixed on the wall surface of the Stirring Vessel 10. In addition, in figure, 13 denotes a jacket.

In the present invention the reactions are carried out using a stirring wing fixed to a stirring axle placed in the center of the stirring vessel under stirring conditions which satisfies the following equation:

$$4.3 \times 10^3 < n^3 d^2 < 4.0 \times 10^6,$$

more preferably

$$9.8 \times 10^3 < n^3 d^2 < 3.6 \times 10^5,$$

more preferably

$$6.5 \times 10^4 < n^3 d^2 < 7.8 \times 10^4$$

wherein d (m) is a diameter of the stirring wing; and n (rpm) is rotation rate.

The stirring wings may be any wings which can be used for stirring or mixing slurry such as a paddle (flat feather) wing, inclined feather wing, turbine wing and anchor wing in addition to the above-mentioned Max blend wing and the above-mentioned full-zone wing. Further, the stirring wing may be one stage type or may be multi-stage type. In addition, a plurality of baffles to be arranged in the axle direction, may be fixed on the side wall surface of the stirring vessel.

As to the range of the rotation rate (number of revolution), if $n^3 d^2$ is not greater than $4.3 \times 10^3$, mixing of particles in slurry becomes extremely poor, resulting in the generation of agglomeration during the reaction. On the other hand, if $n^3 d^2$ is not less than $4.0 \times 10^6$, the particles are broken, resulting in increase of small particles and increase in particle size distribution. This gives rise to poor shapes (not spherical) of the resultant particles.

In this case, as the rotation rate increases, the average particle size increases. Thus, the average particle size can be freely controlled within the above range of the rotation rate, without changing the particle size distribution. In addition, as to the wing diameter, a ratio of Wing Diameter d to Vessel Diameter D is not particularly limited to, but may preferably ranges: 0.3 < d/D < 0.8, more preferably 0.4 < d/D < 0.6.

The thus obtained reaction product is used for the synthesis of the next solid catalyst component after drying or after filtration and washing with an inert solvent such as heptane. The obtained solid product (a) can be used as such in the following step without necessity of grinding or classification for a desired particle size distribution.

The solid product (a) is almost spherical and has a sharp particle size distribution, with individual particles varying very little in sphericity. The solid product (a) is composed of particles which have a sphericity (S) (as defined by Formula (1) above) of smaller than 1.60, preferably smaller than 1.40 and a particle size distribution index (P) (as defined by Formula (2) above) of smaller than 5.0, preferably smaller than 4.0.

As used herein, $D_{90}$ denotes the particle diameter corresponding to a cumulative weight fraction of 90%. In other words, the cumulative sum of the weight of particles smaller than the particle diameter defined by $D_{90}$ accounts for 90% of the total weight of all the particles. $D_{10}$ is defined in the same way.

Further, the above-mentioned solid product (a) has a sphericity (S) (as defined by Formula (a) above) of smaller than 1.60.

Furthermore, the solid product (a) may preferably be one which gives an X-ray diffraction spectrum (by Cu-Kα line) in which three intense peaks appear within the scattering angle of 5-20º, with the ratio of the peak intensity b/c being greater than 0.4, where peaks are designated as a, b, and c starting from the low scattering angle side.

In the present invention, any titanium compounds can be used as the titanium compound (b). These titanium compounds may be represented by, for example, the following formula:

$$TiX^1{}_n(OR^1)_{4-n}$$

wherein $X^1$ is a halogen atom, particularly a chlorine atom; $R^1$ is a hydrocarbon group having 1 to 10 carbon atoms, particularly a straight or branched alkyl group; if there are more than two $R^1$, they may be the same as or different from each other; and n is an integer of 0 to 4.

More specifically, these titanium compounds include $Ti(O\text{-}i\text{-}C_3H_7)_4$, $Ti(O\text{-}C_4H_9)_4$, $TiCl(O\text{-}C_2H_5)_3$, $TiCl(O\text{-}i\text{-}C_3H_7)_3$, $TiCl(O\text{-}C_4H_9)_3$, $TiCl_2(O\text{-}C_4H_9)_2$, $TiCl_2(O\text{-}i\text{-}C_3H_7)_2$ and $TiCl_4$.

In the present invention, if desired, any electron donor compounds (c) can be used. The electron donor compounds (c) usually include organic compounds containing an oxygen atom, nitrogen atom, phosphorus atom or sulphur atom. Examples of such compounds are amines, amides, ketones, nitriles, phosphines, phosphoricamides, esters, ethers, thioethers, alcohols, thioesters, acid anhydrides, acid halides, aldehydes, organic acids and organosilicon compounds containing a Si-O-C linkage.

More specifically, examples of the electron donor compounds are aromatic carboxylic acids such as benzoic acid and p-oxybenzoic acid;

acid anhydrides such as succinic anhydride, benzoic anhydride and p-toluic anhydride;

ketones having 3-15 carbon atoms such as acetone, methyl ethyl ketone, methyl isobutyl ketone, acetophenone, benzophenone and benzoquinone;

aldehydes having 2-15 carbon atoms such as acetaldehyde, propionaldehyde, octyl aldehyde, benzaldehyde and naphthaldehyde;

esters having 2-18 carbon atoms such as methyl formate, ethyl formate, methyl acetate, ethyl acetate, vinyl acetate, propyl acetate, octyl acetate, cyclohexyl acetate, ethyl propionate, methyl butyrate, ethyl butyrate, ethyl valerate, methyl chloroacetate, ethyl dichloroacetate, methyl methoacrylate, ethyl crotonate, ethyl pivalate, dimethyl maleate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, methyl toluate, ethyl toluate, amyl toluate, ethyl ethylbenzoate, methyl anisate, ethyl anisate, ethyl ethoxybenzoate, ethyl p-butoxybenzoate, ethyl o-chlorobenzoate, ethyl naphthoate, gamma-butyrolactone, δ-valerolactone, coumarin, phthalide and ethylene carbonate;

mono- and di-esters of aromatic dicarboxylic acids, especially mono- and and di-esters of phthalic acid, such as monomethyl phthalate, dimethyl phthalate, monomethyl terephthalate, dimethyl terephthalate, monoethyl phthalate, diethyl phthalate, monoethyl terephthalate, diethyl terephthalate, monopropyl phthalate, dipropyl phthalate, monopropyl terephthalate, dipropyl terephthalate, monobutyl phthalate, dibutyl phthalate, monobutyl terephthalate, dibutyl terephthalate, monoisobutyl phthalate, diisobutyl phthalate, monoamyl phthalate, diamyl phthalate, monoisoamyl phthalate, diisoamyl phthalate, ethyl butyl phthalate, ethyl isobutyl phthalate and ethyl propyl phthalate; and acid halides having 2-20 carbon atoms, wherein the acid portion (acy group portion) is preferably an aliphatic (including those having a ring such as alicyclic) mono-, di- or trivalent acyl group having 2 to 20 carbon atoms (a hydroxyl group is withdrawn from a mono-, di- or tribasic acid), or an aromatic (including alkaryl and aralkyl) mono-, di- or trivalent acyl group having 7 to 20 carbon atoms (a hydroxyl group is withdrawn from a mono-, di- or tribasic acid), and the halogen is preferably chlorine or bromine, particularly chlorine.

In the present invention, acid halides which can be preferably used include, for example, acetyl chloride, acetyl bromide, propionyl chloride, butyryl chloride, isobutyryl chloride, 2-methylpropionyl chloride, valeryl chloride, isovaleryl chloride, hexanoyl chloride, methylhexanoyl chloride, 2-ethylhexanoyl chloride, octanoyl chloride, decanoyl chloride, undecanoyl chloride, hexadecanoyl chloride, octadecanoyl chloride, benzylcarbonyl chloride, dicyclohexanecarbonyl chloride, malonyl dichloride, succinyl dichloride, pentanedioyl dichloride, hexanedioyl dichloride, dicyclohexanedicarbonyl dichloride, benzoyl chloride, benzoyl bromide, methylbenzoyl chloride, phthaloyl chloride, isophthaloyl chloride, terephthaloyl chloride and benzene-1,2,4-tricarbonyl chloride. Of these compounds, phthaloyl chloride, isophthaloyl chloride and terephthaloyl chloride are particularly preferable. Phthaloyl chloride is most preferable. In addition, these acid halides may be used alone or in combination with one another.

The electron donor compounds (c) further include ethers having 2 to 20 carbon atoms such as methyl ether, ethyl ether, isopropyl ether, n-butyl ether, amyl ether, tetrahydrofuran, anisole, diphenyl ether, ethylene glycol butyl ether;

acid amides such as acetic acid amide, benzoic acid amide and toluic acid amide;
amines such as tributyl amine, N,N'-dimethylpiperazine, tribenzylamine, aniline, pyridine, pycoline, tetramethyl ethylene diamine;
nitriles such as acetonitrile, benzonitrile, tolunitrile; tetramethyl urea; nitro benzene; lithium butyrate;
organosilicon compounds having a Si-O-C linkage such as trimethylmethoxysilane, trimethylethoxysilane, dimethyldimethoxysilane, dimethyldiethoxysilane, diphenyldimethoxysilane, methylphenyldimethoxysilane, diphenyldiethoxysilane, phenyltrimethoxysilane, gamma-chloropropyltrimethoxysilane, methyltriethoxysilane, ethyltriethoxysilane, vinyltriethoxysilane, butyltriethoxysilane, phenyltriethoxysilane, gamma-aminopropyltriethoxysilane, chlorotriethoxysilane, ethyltriisopropoxysilane, vinyltributhoxysilane, ethyl silicate, butyl silicate, trimethylphenoxysilane, methyltriallyloxysilane, vinyltris(beta-methoxyethoxy)silane, vinyltriacetoxysilane and dimethyltetraethoxydisiloxane.

Of these compounds, esters, ethers, ketones and acid anhydrides are preferable.

The solid catalyst component (A) can be prepared by any known methods using the above-mentioned solid product (a), the titanium compound (b) and if desired the electron donor compound (c). For example, it is preferable to produce the solid catalyst component (A) by bringing the solid product (a) into contact with the electron donor compound (c), and then bringing the obtained product into contact with the titanium compound (b).

There are no restrictions as to the condition under which the solid product (a) is brought into contact with the electron donor compound (c). Usually, the amount of the electron donor compound (c) is 0.01 to 10 moles, preferably 0.05 to 5 moles, per 1 mole of the solid product (a) in terms of magnesium atom. They should be kept in contact with each other for 5 minutes to 10 hours at 0 to 200°C, preferably for 30 minutes to 3 hours at 30 to 150°C. The reaction may be carried out in an inert hydrocarbon solvent such as pentane, hexane, heptane and octane.

There are no restrictions as to the condition under which the solid product (a) is brought into contact with the titanium compound (b), or the contact product of the solid product (a) and the electron donor compound (c) is brought into contact with titanium compound (b). Usually, the amount of the titanium compound (b) is 1 to 50 moles, preferably 2 to 20 moles, per 1 mole of magnesium in the solid product. The reaction is usually carried out for 5 minutes to 10 hours at 0 to 200°C, preferably for 30 minutes to 5 hours at 30 to 150°C.

For the contact reaction, the titanium compound (b) may be used alone as such if it is a liquid (like titanium tetrachloride); otherwise, it may be used in the form of solution in an inert hydrocarbon solvent (such as hexane, heptane and kerosene). Prior to the above-mentioned contact reaction, the solid product (a) may be treated with any one of halogenated hydrocarbons, halogen-containing silicon compounds, halogen gases, hydrogen chloride or hydrogen iodide.

In addition, after the contact reaction, the reaction product should preferably be washed with an inert hydrocarbon (such as n-hexane and n-heptane).

The catalyst component should preferably have a pore volume of not less than 0.4 cc/g (1 cc/g = 1 cm$^3$/g) and a specific surface area of not less than 300 m$^2$/g; otherwise it might be poor in catalytic activity. In addition, the pore volume and specific surface area can be obtained according to the BET method which depends on measuring the volume of nitrogen gas adsorbed to the sample. (See J. Am. Chem. Soc. Vol. 60, p. 309, 1983).

The organometallic compound (B) is an organic compound containing a metal belonging to Groups I to III of the Periodic Table. These metals include, for example, lithium, sodium, potassium, zinc, cadmium and aluminum, of which aluminum is preferable. Examples of the organometallic compound (B) include alkyl lithium such as methyl lithium, ethyl lithium, propyl lithium and butyl lithium, and dialkyl zinc such as dimethyl zinc, diethyl zinc, dipropyl zinc and dibutyl zinc.

The organoaluminum compounds which can be used in the present invention are represented by the following formula:

$$AlR^2{}_m X^2{}_{3-m}$$

wherein $R^2$ is an alkyl group having 1-10 carbon atoms, cycloalkyl group or aryl group; m is an integer of 1 to 3; and $X^2$ is a halogen atom such as chlorine or bromine.

Examples of the organoaluminum compound include trialkylaluminum compounds such as trimethylaluminum, triethylaluminum, triisopropylaluminum, triisobutylaluminum and trioctylaluminum; and dialkylaluminum monohalide compounds such as diethylaluminum monochloride, dipropylaluminum monochloride and dioctylaluminum monochloride.

The above-mentioned electron donor compounds (c) which can be used to prepare the above solid catalyst component (A) can be used as the electron donor compounds (C). The electron donor compound (C) to be used may be the same as or different from the electron donor compounds to be used to prepare the above solid catalyst component (A).

The olefins which can be produced by the above described processes for producing polyolefins are represented by the following formula:

$$R^3\text{-}CH{=}CH_2$$

wherein $R^3$ is a hydrogen atom, a linear or branched $C_{1\text{-}20}$ alkyl group or cycloalkyl group.

Examples of the olefins include straight-chain monoolefins such as ethylene, propylene, butene-1, pentene-1, hexene-1 and octene-1; branched-chain monoolefins such as 4-methyl-pentene-1; and dienes such as butadiene. The process of the present invention may be effectively used for the homopolymerization and copolymerization of the above-mentioned olefins.

The polymerization may be carried out under the same conditions as used for the known process. In other words, the polymerization may be performed at an olefin partial pressure higher than the atmospheric pressure, at a temperature of from -80ºC to +150ºC, in the gas phase or liquid phase, and, if necessary, in the presence of an inert hydrocarbon diluent. The polymerization carried out under such conditions gives rise to a polyolefin powder having an almost complete sphericity and a sharp particle size distribution. In other words, the polyolefin powder has a sphericity (S) of smaller than 1.60 and a particle size distribution index (P) of smaller than 5.0, as mentioned above.

The polymerization process is characterized by the use of a Ziegler-type catalyst in which the catalyst carrier is the above-mentioned solid product (a) formed by the reaction of metallic magnesium, an alcohol, and a specific amount of a halogen-containing compound. Thus, components other than the solid product (a), i.e., the titanium compound (b), the organometallic compound (B), the solid catalyst component (A), and other desirable components (such as electron donor compound), can be those known in the prior art. Preparation methods of the solid catalyst component (A), conditions for olefin polymerization may be those known in the prior art. These prior art techniques are disclosed in JP Pat. Appln. Examined Pub. No. Sho 46-34098 and JP Pat. Appln. Unexamined Pub. Nos. Sho52-98076; 53-2580; 53-43094; 61-181807; 62-127305; 60-63207 and 60-139706.

As mentioned above, according to the process of the present invention, spherical solid products (a) having controlled particle size and narrow particle size distribution, which can be used as such without being subjected to particle size control treatement such as grinding or classification, can be produced in one step reaction. In this case, the particle size can be readily controlled by changing the reaction conditions. In addition, the use of the solid product (a) results in high catalytic activity, without using particle size control treatment such as grinding or classification, and also gives rise to a polymer having high stereo-regularity and good powder morphology.

Brief Description of the Drawings

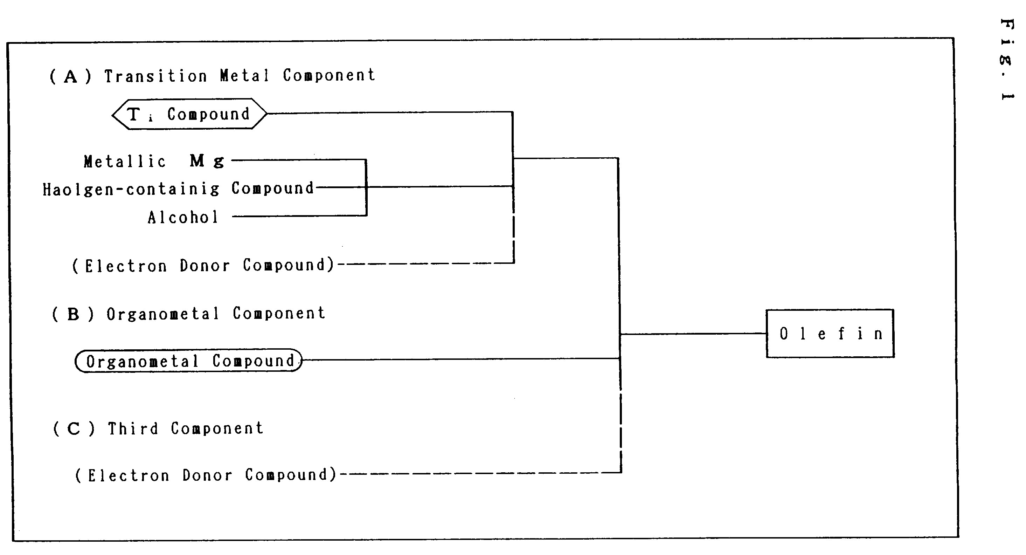

Fig. 1 is a flowchart showing a production process according to the present invention;
Fig. 2 is a schematic view showing a stirring vessel having a max blend wing;
Fig. 3 is a schematic view showing a stirring vessel having a full-zone wing;
Fig. 4 (a) is a schematic view showing a stirring vessel having a paddle wing;
Fig. 4 (b) is a plane view showing a paddle wing; and
Fig. 5 is a schematic view showing a stirring vessel having a fuddler wing.

Best Embodiment For Carrying Out the Invention

The present invention will be described in more detail with reference to the attached drawings; however the present invention is not limited to the following Examples.

In the following Examples and Comparative Examples, the following reagents were used.

Metallic Magnesium:Granular Form (350 micrometers in average particle size.)
Ethanol:Reagent First Grade (Made by Wako Junyaku Co.)
Iodine:Reagent First Grade (Made by Wako Junyaku Co.)
Magnesium Chloride:Reagent First Grade (Made by Wako Junyaku Co.)
Magnesium Iodide:Reagent First Grade (Made by Wako Junyaku Co.)

Measurements of X-ray diffraction were carried out in the following manner.

The magnesium compound was ground into powders having an average particle size of 10 μm, which was subsequently vacuum-dried at normal temperature. The dry powder was filled in a cell of Mylar film under an inert gas atmosphere. The Mylar film is 6 μm thick and the cell is 1 mm thick (including the thickness of the Mylar film and dry powder). The cell was attached to the powder X-ray diffraction apparatus (made by Rigaku Denki Kogyo Co.) for measurement of X-ray diffraction spectrum by the transmission method. X-rays having a wavelength ($\lambda K\alpha$) of 1.543 Å (1 Å = 0.1 nm) were generated by using a copper anticathode at a voltage of 50 kV and a current of 120 mA.

Example 1

(1) Preparation of Solid Product (a):

In a glass reactor (inner volume: 0.5 liter) equipped with a stirrer, in which the air had been thoroughly replaced by argon, were placed 200 g of ethanol and 0.45 g of (anhydrous) magnesium chloride. After the magnesium chloride was dissolved in ethanol, 12 g of metallic magnesium were introduced into the reaction mixture. The reaction was carried out by heating with stirring under refluxing until no hydrogen was evolved any longer to obtain a solid product. The reaction liquid containing the solid product was dried under reduced pressure to obtain a solid product (a).

It was confirmed by microscope observation that the obtained solid product was spherical. The solid product was analyzed by X-ray diffractometry with Cu-K$\alpha$ line. As a result, three diffraction peaks appeared within the range of $2\theta = 5$-$20°$. The ratio of the peak intensity b/c was 0.69, where the peaks are designated as a, b, and c starting from the low scattering angle side.

(2) Preparation of Solid Catalyst Component (A)

In a three-mouth glass flask (inner volume: 0.5 liter) sufficiently purged with argon gas, were placed 16 g of the above-mentioned solid product (a) (not ground) and 80 ml of dehydrated heptane. Then, 2.4 ml of silicon tetrachloride were added to the reaction mixture with agitation. Further, 2.5 ml of diethyl phthalate were added while the reaction system was kept-at 60°C. After, 80 ml of titanium tetrachloride were added, the reaction mixture was kept at 110°C for 2 hours, and then purified with heptane heated to 80°C. After 100 ml of titanium tetrachloride were further added, the reaction mixture was kept at 110°C for 2 hours, and purified with heptane to obtain a solid catalyst component (A).

The solid catalyst component had a specific surface area of 382 m$^2$/g and a pore volume of 0.61 cc/g.

(3) Polymerization

In an SUS-made autoclave (inner volume: about 1.0 liter) sufficiently purged with argon, were placed 400 ml of purified heptane, 1 mmol of triethylaluminum, 0.25 mmol of cyclohexylmethyldimethoxysilane and 0.005 mmol of the above-mentioned solid catalyst component (A) in terms of titanium atom. Hydrogen was introduced into the reaction system until the inner pressure reached 0.5 Kg/cm$^2$ and polymerization of propylene was carried out at 70°C for 2 hours at a total pressure of 8 Kg/cm$^2$.

The results are as shown in Table 1.

In addition, "Stereo-regularity" used in the Table means an insoluble fraction extracted from boiling heptane for 6 hours.

The sphericity (S) and the particle size distribution index (P) were measured in the following manner.

(1) In the case of Solid Product (a):

Sphericity (S): A sample of dried Solid Product (a) was photographed with a magnification of x 150 using a scanning electron microscope (Model JSM-25S III, made by Nippon Denshi Co.) at an accelerating voltage of 5 kV. The resulting negative underwent image processing by the transmission method using an image processing apparatus (made by Nexus Co.). Particles smaller than 20 pixels (each pixel measuring 1.389 micrometer square) were disregarded, and the remaining particles (about 2000 pieces) were examined. The sphericity was calculated according to Formula (1) above from $E_1$ (the projected perimeter of a particle) and $E_2$ (the perimeter of the circle of equal projected area of a particle).

Particle Size Distribution Index (P): Particle sizes of the solid product particles were measured by the light transmission method when they were suspended in liquid hydrocarbon. The 90% particle diameter ($D_{90}$) and 10% particle diameter ($D_{10}$) were obtained from the particle size distribution plotted on a logarithmic distribution paper. Then, the particle size distribution index (P) was calculated according to Formula (2) above.

(2) In the case of Polyolefin Powders:

Sphericity (S): A sample of polyolefin powders was subjected to image processing by the direct reflection method. The sphericity was calculated according to Formula (1) above in the same manner as in Solid Product (a) except that each pixel measured 0.0813 micrometer square.

Particle Size Distribution Index (P): The particle size distribution was measured by sieving. The 90% particle diameter ($D_{90}$) and 10% particle diameter ($D_{10}$) were obtained from the particle size distribution plotted on a logarithmic distribution paper. Then, the particle size distribution index (P) was calculated according to Formula (2) above.

Example 2

(1) Preparation of Solid Product (a):

The procedure of Example 1 (1) was repeated except that the amount of magnesium chloride added was changed to 0.3 g.

It was confirmed by microscope observation that the solid product obtained was spherical.

(2) Preparation of Solid Catalyst Component (A):

Solid Catalyst Component (A) was prepared using the obtained solid product in the same manner as in Example 1 (2).

(3) Polymerization:

The propylene polymerization was carried out using the obtained Solid Product (a) in the same manner as in Example 1 (3).

The results are as shown in Table 1.

Example 3

(1) Preparation of Solid Product (a):

Solid Product (a) was prepared in the same manner as in Example 1 (1).

(2) Preparation of Solid Catalyst Component (A):

Fifty (50) ml of hexane containing $Zr(O-n-Bu)_4$ and $Ti(O-n-Bu)_4$ in an amount shown in Table 1 dissolved therein were added dropwise to 150 ml of hexane slurry containing 10 g of the obtained Solid Product (a) at 20°C for 15 minutes with agitation. Then, 92 ml of a hexane diluted solution containing 50 weight percent of $EtAlCl_2$ were added dropwise to the reaction mixture at 35°C for 120 minutes. The reaction was further carried out under refluxing conditions for 120 minutes. Thereafter, the reaction product was purified with dried hexane until chlorine could not be detected in the solution. Then, the total volume was adjusted by hexane to 500 ml.

(3) Polymerization:

A 1-liter autoclave equipped with a stirrer was charged with 400 ml of n-hexane and heated to 80°C. After the inner atmosphere was sufficiently replaced by hydrogen gas, hydrogen and ethylene were charged in this order to raise an ethylene pressure to 2.9 $Kg/cm^2G$ and an ethylene pressure to 5.4 $Kg/cm^2G$. To this, the Solid Catalyst Component (A), obtained in the above Step (2), containing 0.010 mmol of Ti and 0.50 mmol of triisobutylaluminum were added. The ethylene polymerization was carried out for 1 hour while the total pressure was kept at 5.4 $Kg/cm^2G$ by supplying ethylene.

The results are as shown in Table 1.

Example 4

(1) Preparation of Solid Product (a):

The procedure of Example 1 (1) was repeated except that 1.35 g of magnesium iodide were used instead of 0.45 g of magnesium chloride.

(2) Preparation of Solid Catalyst Component (A):

Solid Catalyst Component (A) was prepared using the obtained solid product in the same manner as in Example 1 (2).

(3) Polymerization:

The propylene polymerization was carried out using the obtained Solid Product (a) in the same manner as in Example 1 (3).

The results are as shown in Table 1.

Comparative Example 1

(1) Preparation of Solid Product (a):

The procedure of Example 1 (1) was repeated except that magnesium chloride was not used. The solid product obtained was ground with a 1-liter stainless ball mil for 24 hours.

(2) Preparation of Solid Catalyst Component (A):

Solid Catalyst Component (A) was prepared using the obtained solid product in the same manner as in Example 1 (2).

(3) Polymerization:

The propylene polymerization was carried out using the obtained Solid Product (a) in the same manner as in Example 1 (3).

The results are as shown in Table 1.

Table 1

| | Example 1 | Example 2 | Example 3 | Example 4 | Comp.Ex. 1 |
|---|---|---|---|---|---|
| Iodine/Metallic Mg (g-atom/mole) | 0.019 | 0.013 | 0.019 | 0.020 | 0 |
| Average Particle Size of Solid Product (a) ($\mu$m) | 75 | 55 | 75 | 67 | 560 |
| Sphericity of Solid Product (a) | 1.20 | 1.19 | 1.20 | 1.19 | 1.87 |
| Particle Size Distribution Index of Solid Product (a) | 1.9 | 2.1 | 1.9 | 2.1 | 7.6 |
| Amount of $T_i$ Contained in Solid Ctalyst Component (A) (mg$T_i$/g-catalyst) | 30 | 29 | 63 [*1] | 32 | 18 |
| Results of Polymerization<br>Yeild of Polymer (g) | 170.4 | 156.8 | 155.0 | 162.3 | 132.4 |
| Catalytic Activity (KgPP/g·$T_i$·2hr) | 711.5 | 654.7 | 113.0[*2] | 677.7 | 552.8 |
| Stereo-regularity(I.I) (%) | 98.7 | 98.1 | - | 98.4 | 97.2 |
| Powder Bulk Density (g/cc) | 0.45 | 0.43 | 0.40 | 0.42 | 0.33 |
| Powder Particle Size<br>250 $\mu$m or less (%) | 3.3 | 4.2 | 4.0 | 4.0 | 11.6 |
| 2830$\mu$m or more (%) | 0.5 | 0.8 | 1.8 | 1.2 | 2.2 |
| Shape of Powders | Spherical | Spherical | Spherical | Spherical | Amorphous |
| Sphericity of Powders | 1.26 | 1.24 | 1.33 | 1.24 | 1.76 |
| Particle Size Distribution Index of Powder | 2.4 | 2.2 | 2.9 | 2.1 | 6.7 |

* 1 : mg(Ti+Zr)/g-catalyst

* 2 : KgPE/g(Ti+Zr)·hr

Example 5

An SUS-made reactor equipped with a stirrer (vertical type with four baffles as shown in Tables 2 to 5 and with an inner volume of 80 liters), was sufficiently purged with nitrogen and charged with 2.2 Kg of metallic magnesium, 31 Kg of ethanol and 0.2 Kg of iodine. The reaction was carried out with agitation under refluxing conditions until no hydrogen was evolved any longer, to obtain a solid reaction product. In addition, the Max blend wing (Manufactured by Sumitomo Heavy Machinery) was used as a stirring wing, and the stirring rotation rate was set at 130 rpm.

The reaction solution containing the solid reaction product was dried under reduced pressure to obtain a magnesium compound.

Example 6

The procedure of Example 5 was repeated except that the reaction wing was changed to a full-zone wing (Manufactured by Shinkoh PanTec) and the stirring rotation rate was changed to 110 rpm.

Comparative Example 2

The procedure of Example 5 was repeated except that the H/L was changed to 0.40.

Comparative Example 3

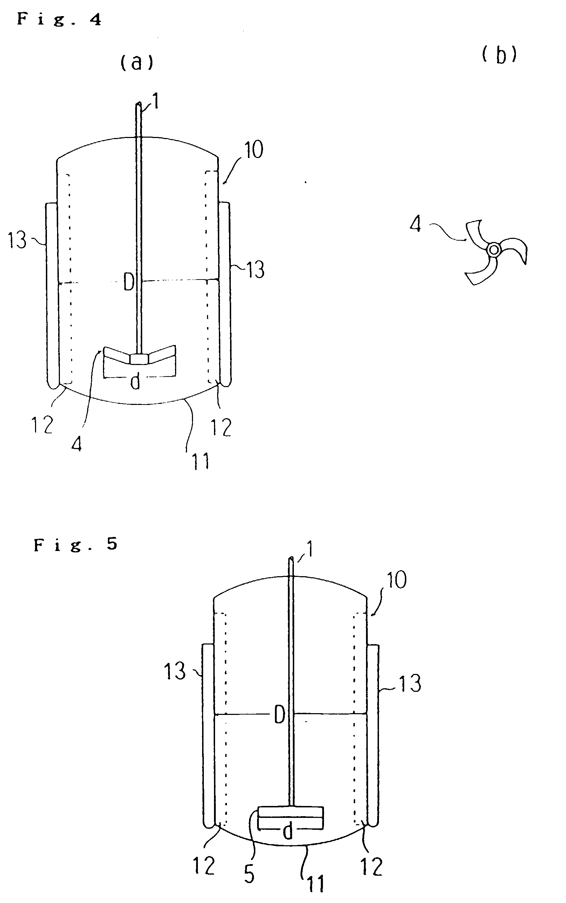

The procedure of Example 5 was repeated except that the the stirring wing was changed to Paddle Wing 4 as shown in Figs. 4 (a) and 4 (b) and the stirring rotation rate was changed to 40 rpm.

Example 7

The procedure of Example 5 was repeated except that the stirring wing was changed to Fuddler Wing 5 with a diameter of 0.2 m as shown in Fig. 5 and the stirring rotation rate was changed to 450 rpm.

Example 8

The procedure of Example 7 was repeated except that the stirring rotation rate was changed to 50 rpm.

Example 9

The procedure of Example 7 was repeated except that the stirring wing was changed to a paddle wing with a diameter of 0.2 m and the stirring rotation rate was changed to 200 rpm.

Comparative Example 4

The procedure of Example 7 was repeated except that the stirring rotation rate was changed to 500 rpm.

Comparative Example 5

The procedure of Example 9 was repeated except that the stirring rotation rate was changed to 40 rpm.
The stirring conditions and the results of Examples 5 to 9 and Comparative Examples 2 to 5 are as shown in Tables 2 and 3.

Table 2

| | Inner Volume of Reactor (ℓ) | Shape of Wing | Wing Diameter d(m) | Vessel Diameter D(m) | Rotation Rate n(rpm) | H/L | Average Particle Size of (a) (μm) | S of (a) | P of (a) | Shape of (a) |
|---|---|---|---|---|---|---|---|---|---|---|
| Example 5 | 80 | Max Blend Wing | 0.2 | 0.4 | 130 | 0.85 | 58 | 1.19 | 1.6 | Spherica |
| Example 6 | 80 | Full-zone Wing | 0.2 | 0.4 | 110 | 0.85 | 65 | 1.21 | 1.8 | Spherica |
| Comp.Ex.2 | 80 | Max Blend Wing | 0.2 | 0.4 | 130 | 0.40 | 75 | 1.20 | 4.5 | Spherica |
| Comp.Ex.3 | 80 | Paddle Wing | 0.2 | 0.4 | 40 | 0.21 | 412 | 3.35 | 12.5 | Amorphous |

(a) :Magnesium Compound

Table 3

| | Inner Volume of Reactor ($\ell$) | Shape of Wing | Wing Diameter d(m) | Vessel Diameter D(m) | Rotati Rat n(rpm) | $n^3d^2$ | Average Particle Size of (a) ($\mu$m) | S of (a) | P of (a) | Shape of (a) |
|---|---|---|---|---|---|---|---|---|---|---|
| Example 7 | 80 | Fuddler Wing | 0.2 | 0.4 | 450 | $3.6\times10^6$ | 31 | 1.20 | 3.6 | Spherica |
| Example 8 | 80 | Fuddler Wing | 0.2 | 0.4 | 50 | $5.0\times10^3$ | 96 | 1.19 | 4.3 | Spherica |
| Example 9 | 80 | Paddle Wing | 0.2 | 0.4 | 200 | $3.2\times10^5$ | 58 | 1.19 | 4.6 | Spherica |
| Comp.Ex.4 | 80 | Fuddler Wing | 0.2 | 0.4 | 500 | $5.0\times10^6$ | 28 | 1.69 | 9.8 | Amorphous |
| Comp.Ex.5 | 80 | Paddle Wing | 0.2 | 0.4 | 40 | $2.6\times10^3$ | 412 | 3.35 | 12.5 | Amorphous |

(a) : Magnesium Compound

EP 0 544 006 B1

Industrial Applicability

As mentioned above, the present invention can be effectively used as catalyst components for olefin polymerization and also useful for production of polyolefins.

**Claims**

1. A process for producing a solid catalyst carrier component for an olefin polymerization catalyst, said solid catalyst carrier component having a sphericity (S) of smaller than 1.60 as defined by the following Formula (1):

$$S = (E_1/E_2)^2 \qquad (1)$$

wherein $E_1$ denotes the projected perimeter of a particle, and $E_2$ denotes the perimeter of the circle of equal projected area of a particle, and a particle size distribution index (P) of smaller than 5.0 as defined by the following Formula (2):

$$P = D_{90}/D_{10} \qquad (2)$$

wherein $D_{90}$ denotes the particle diameter corresponding to a cumulative weight fraction of 90 %, and $D_{10}$ denotes the particle diameter corresponding to a cumulative weight fraction of 10 %,
said process being characterized in that metallic magnesium, alcohol and a halogen-containing metal compound containing not less than 0.0001 gram-atom of a halogen atom, per 1 gram-atom of the metallic magnesium, are introduced into a stirring vessel, and a stirring wing fixed to a stirring axle placed in the center of the stirring vessel is used as a stirring wing, that the stirring is conducted under stirring conditions which satisfy the following equation:

$$4.3 \times 10^3 < n^3 d^2 < 4.0 \times 10^6$$

wherein d (m) is a diameter of the stirring wing; and n (rpm) is rotation rate, and that the stirring wing comprises a bottom paddle wing located close to the bottom of the vessel and an upper wing located higher than the bottom paddle wing, that the stirring wing during a reaction satisfies the following equation:

$$H/L > 0.5$$

wherein H is height between the bottom of the vessel and the most upper portion of the upper wing; and L is liquid level during the reaction, and that the most upper portion of the bottom paddle wing is located lower than the liquid level.

2. The process of claim 1 wherein a titanium compound is added to said carrier component.

**Patentansprüche**

1. Verfahren zur Herstellung einer festen Katalysatorträgerkomponente für einen Katalysator für die Olefinpolymerisation, wobei die feste Katalysatorträgerkomponente eine Sphärizität (S) von weniger als 1,60 aufweist, wobei die Sphärizität gemäß der folgenden Formel (1) definiert ist:

$$S = (E_1/E_2)^2 \qquad (1),$$

wobei $E_1$ den projezierten Umfang eines Partikels bezeichnet, und wobei $E_2$ den Umfang des Kreises bezeichnet, dessen Fläche gleich der projezierten Fläche eines Partikels ist, sowie einen Index (P) der Partikelgrößenverteilung, welcher kleiner ist als 5,0, wobei dieser Index (P) durch die folgende Formel (2) definiert ist:

$$P = D_{90}/D_{10} \qquad\qquad (2),$$

wobei $D_{90}$ den Partikeldurchmesser bezeichnet, der einem Gesamtgewichtsanteil von 90 % entspricht, und wobei $D_{10}$ den Partikeldurchmesser bezeichnet, der einem Gesamtgewichtsanteil von 10 % entspricht,
wobei das Verfahren dadurch gekennzeichnet ist, daß metallisches Magnesium, Alkohol und eine ein Halogenid enthaltende Metallverbindung,- die nicht weniger als 0,0001 g-Atom eines Halogenidatoms pro 1 g-Atom des metallischen Magnesiums enthält, in ein Rührgefäß eingeführt werden und dadurch, daß an einer Rührachse, die in der Mitte des Rührgefäßes angeordnet ist, ein Rührflügel befestigt ist, der als Rührflügel verwendet wird, daß das Rühren unter Rührbedingungen durchgeführt wird, welche die folgende Gleichung erfüllen:

$$4{,}3 \times 10^3 < n^3 d^2 < 4{,}0 \times 10^6,$$

wobei d (m) der Durchmesser des Rührflügels ist, und wobei n (U/min) die Drehzahl ist, und daß der Rührflügel einen unteren blattförmigen Flügel besitzt, der dicht am Boden des Gefäßes angeordnet ist, und einen oberen Flügel, welcher höher als der untere blattförmige Flügel angeordnet ist, daß der Rührflügel während einer Reaktion die folgende Gleichung erfüllt:

$$H/L > 0{,}5,$$

wobei H die Höhe zwischen dem Boden des Gefäßes und dem höchsten Teil des oberen Flügels ist, und wobei L der Flüssigkeitspegel während der Reaktion ist, und daß der höchste Teil des unteren blattförmigen Flügels niedriger angeordnet ist als der Flüssigkeitspegel.

2. Verfahren nach Anspruch 1, bei dem der Trägerkomponente eine Titanverbindung zugesetzt wird.

**Revendications**

1. Procédé de production d'un composant de support de catalyseur solide pour un catalyseur de polymérisation d'oléfine, ledit composant de support de catalyseur solide ayant une sphéricité (S) plus petite que 1,60 telle que définie par la formule (1) suivante :

$$S = (E_1/E_2)^2 \qquad\qquad (1)$$

dans laquelle $E_1$ désigne le périmètre projeté d'une particule et $E_2$ désigne le périmètre du cercle d'aire projetée égale d'une particule, et un indice de distribution de tailles de particules (P) plus petit que 5,0 tel que défini par la formule (2) suivante :

$$P = D_{90}/D_{10} \qquad\qquad (2)$$

dans laquelle $D_{90}$ désigne le diamètre de particule correspondant à une fraction pondérale cumulative de 90 % et $D_{10}$ désigne le diamètre de particule correspondant à une fraction pondérale cumulative de 10 %,
ledit procédé étant caractérisé en ce que du magnésium métallique, un alcool et un composé métallique contenant de l'halogène ne contenant pas moins de 0,0001 atome-gramme d'un atome d'halogène, pour 1 atome-gramme de magnésium métallique, sont introduits dans un récipient d'agitation et en ce qu'une ailette d'agitation fixée à un arbre d'agitation placé au centre du récipient d'agitation est utilisée comme ailette d'agitation, en ce que l'agitation est réalisée sous des conditions d'agitation qui satisfont à l'équation suivante :

$$4{,}3 \times 10^3 < n^3 d^2 < 4{,}0 \times 10^6$$

dans laquelle d (m) est un diamètre de l'ailette d'agitation et n (tpm) est la vitesse de rotation et en ce que l'ailette d'agitation comprend une ailette en forme de palette de fond agencée à proximité du fond du récipient et une ailette supérieure agencée plus haut que l'ailette en forme de palette de fond, en ce que l'ailette d'agitation au cours d'une réaction satisfait à l'équation suivante :

$$H/L > 0,5$$

dans laquelle H est la hauteur entre le fond du récipient et la partie la plus élevée de l'ailette supérieure et L est le niveau de liquide au cours de la réaction et en ce que la partie la plus élevée de l'ailette en forme de palette de fond est agencée en dessous du niveau du liquide.

2. Procédé suivant la revendication 1, dans lequel on ajoute un composé de titane au composant de support précité.

Fig. 1

Fig. 2

Fig. 3

**F i g . 4**

(a)

(b)

**F i g . 5**